# EUROPEAN PATENT APPLICATION

(11) **EP 4 570 756 A1**
(43) Date of publication of application: **18.06.2025**
(21) Application number: 23217085.2
(22) Date of filing: 15.12.2023
(51) Int. Cl.: C01B 32/977, C01B 32/956, C01B 33/107

(54) **CVD SIC PRODUCTION REACTOR FOR THE PRODUCTION OF SIC GRANULES, SYSTEM AND METHOD FOR THE PRODUCTION OF SIC GRANULES**

(71) Applicant: Zadient Technologies SAS, 73800 Sainte-Hélène-du-Lac (FR)
(72) Inventor: SCHAAFF, Friedrich, 06116 Halle (DE); TIEFEL, Hilmar Richard, 01219 Dresden (DE); GRÖSMANN, Ivo, 21029 Hamburg (DE)
(74) Representative: Kehl, Ascherl, Liebhoff & Ettmayr Patentanwälte Partnerschaft mbB

(57) **Abstract**

The present invention refers to a SiC and Chlorosilane production system 2540, comprising at least one CVD SiC production reactor 850, in particular SiC fluidized bed reactor 850a, in particular according to claim 4, and a Chlorosilane production unit 2550, wherein the Chlorosilane production unit 2550 comprises at least a bed reactor 2416, in particular a fixed bed reactor or a fluidized bed reactor, for generating Chlorosilanes by reacting at least one fraction of the vent gas mixture provided via the vent gas outlet 216 of the CVD SiC production reactor 850 and Si, wherein further fractions of the vent gas mixture at least comprise H2 and a C-bearing molecule, in particular methane, and wherein Si is provided as solid 2398 inside the bed reactor 2416.

## Description

The present inventions refers to a CVD SiC production reactor, a system comprising such a CVD SiC production reactor and a Chlorosilane production unit and a method for the production of Silicon Carbide (SiC).

The production of high purity granular SiC is not possible at the time being. On the one hand side granular SiC requires grushing of large SiC solids. Since SiC is very hard, grushing or any other mechanical size reduction causes a high amount of wear. Said wear contaminates the granular SiC.

It is known to produce Silicon (Si) in a fluidized bed reactor, cf. US4,314,525 and WO2013/049314A2. However, Si is significantly less hard compared to SiC. Thus, the high amount of wear is not present during a regular production of Si- Furthermore, granular Si production does not require a carbon (C) bearing molecule.

It is therefore an object of the present invention to provide a CVD SiC production reactor that allows the production of high purity granular SiC.

The before mentioned object is solved by a CVD SiC production reactor, in particular SiC fluidized bed reactor, according to claim 1. The CVD SiC production reactor according to the present invention preferably comprises at least a process chamber, wherein the process chamber at least surrounds a reaction zone for growing SiC, a gas inlet unit for feeding one feed-medium or multiple feed-mediums into the reaction zone of the process chamber for generating or providing a source medium and for generating a fluid flow. The gas inlet unit is preferably coupled with at least one feed-medium source, wherein a Si and C feed-medium source provides at least Si and C, in particular SiCl3(CH3), and wherein a carrier gas feed-medium source provides a carrier gas, in particular H2, or wherein the gas inlet unit is highly preferably coupled with at least two feed-medium sources, wherein a Si feed medium source provides at least Si and wherein a C feed medium source provides at least C, in particular natural gas, Methane, Ethane, Propane, Butane and/or Acetylene, and wherein a carrier gas medium source provides a carrier gas, in particular H2. The CVD SiC production reactor according to the present invention also comprises a seed material particles providing unit for providing seed material particles into the reaction zone. The seed material particles preferably have at least a diameter between 20µm and 1000µm. The seed material particles providing unit is preferably coupled with a feed medium supply conduit or pipe, wherein the seed particles can be forwarded into the feed medium supply conduit or pipe by means of the seed material particles providing unit. Thus, the gas flow

The reaction zone and the gas inlet unit are preferably configured to form the fluid flow in a manner to hold the seed material particles, in particular a defined amount of seed material particles, with the fluid flow for a defined minimum time of more than 5 seconds, in particular of more than 30 seconds, inside the reaction zone for forming SiC granules by accumulating SiC. CVD SiC production reactor according to the present invention also comprises a heating unit, in particular an inductive heating unit, at least partially arranged in sections around the reaction zone and preferably entirely surrounding the reaction zone for heating the source medium and the seed material particles inside the reaction zone to a temperature in the range between 1300°C and 2000°C.

This solution is beneficial since the SiC does not have to be crushed or mechanically treated, thus due to the absence of crushing or mechanical treatment no wear and therefor no contamination is present.

Further preferred embodiments are subject-matter of the following specification parts and/or the dependent claims.

The reaction zone is according to a preferred embodiment of the present invention at least partially surrounded by one or multiple insulating sections, wherein the one or multiple insulating sections is /are arranged in a tube-like manner forming a fluid flow entering section for fluid flow entering at least one fraction of the reaction zone and a fluid flow output section for fluid flow exiting the at least one fraction of the reaction zone. The term tube-like manner herein describes that insulation section/s is/are extending in the direction of the fluid flow, in particular the direction of the fluid flow through the reaction zone, or inclined in an angle of less than 30° or less than 15° with respect to the direction of the fluid flow, in particular the direction of the fluid flow through the reaction zone. Furthermore, the insulation section/s is/are surrounding at least in sections the reaction zone in circumferential direction. The cross-sectional shape of the insulation section/s orthogonal to the direction of the fluid flow can be rectangular, circular, triangular or deviating from a rectangular shape and/or deviating from a circular shape and/or deviating from a triangular shape. The one or multiple insulating section/s comprise or consist according to a preferred embodiment of the present invention of ceramic material, in particular oxide ceramic material, in particular TiO2, ZrO2, Al2O3, and/or non-oxide ceramic material, in particular BN, SiC, Si3N5. This embodiment is beneficial since the reaction zone can be heated to temperatures above 1300°C.

The seed material particles providing unit is according to a further preferred embodiment of the present invention configured to continuously feed seed material particles into the process chamber. It is additionally or alternatively possible that the seed material particles providing unit provides the seed material particles in a step wise manner. However, it is also possible that the steps of the step wise providing are continuously repeated. This embodiment is beneficial since the SiC production can be adjusted to an output optimum and can be kept on said optimum for hours or days or weeks compared to non-continuous seed material supply.

A gas pre-heating unit for heating the one feed-medium or multiple feed-mediums to a temperature above 700°C, in particular above 1100°C or above 1200°C, is provided according to a further preferred embodiment of the present invention. The gas pre-heating unit is preferably configured to pre-heat the one feed-medium or multiple feed-mediums prior to generating the fluid flow by feeding the one feed-medium or the multiple feed-mediums into the reaction zone by means of the gas inlet unit. It is alternatively possible to provide a pre-heating unit or pre-heating subunit inside the reactor chamber, in particular in the bottom part and/or top part of the reactor chamber.

At least one turnstile device, in particular wing lock or rotary valve, is provided according to a further preferred embodiment of the present invention in a section below the reaction zone for removing SiC granules. It is possible to operate the turnstile device in a continuous manner or in a step wise manner, in particular in dependency of time and/or weight/force sensor signal.

A vent gas outlet for removing a vent gas mixture resulting from a reaction between the fluid flow of the one feed-medium or multiple feed-mediums and the seed material particles in the reaction zone from the process chamber is provided according to a further preferred embodiment of the present invention. This embodiment is beneficial since due to the gas inlet unit and the vent gas outlet a gas flow can established.

The above-mentioned object is also solved by a SiC and Chlorosilane production system according to claim 5. SiC and Chlorosilane production system according to the present invention comprises at least one CVD SiC production reactor, in particular SiC fluidized bed reactor, according to any of claims 1 to 4 and a Chlorosilane production unit. The Chlorosilane production unit comprises at least a bed reactor, in particular a fixed bed reactor or a fluidized bed reactor, for generating Chlorosilanes by reacting at least one fraction of the vent gas mixture provided via the vent gas outlet of the CVD SiC production reactor and Si, wherein further fractions of the vent gas mixture at least comprise H2 and a C-bearing molecule, in particular methane, and wherein Si is provided as solid inside the bed reactor. This embodiment is beneficial since the gas flow passes the reaction zone with high velocity. The velocity of the gas flow can preferably be modified, in particular by means of the gas inlet unit. The velocity of the gas flow is preferably more than 0,5m/s or more than 1m/s and preferably more than 5m/s and highly preferably more than 10m/s. The velocity of the gas flow is preferably between 0,1 m/s and 100m/s, in particular between 1m/s and 90m/s and preferably between 1m/s and 70m/s, wherein the velocity of the gas flow can be increased over time, in particular to compensate mass accumulation of the growing granules. Thus, just a small amount of C and Si of the feed medium or feed mediums can be transferred onto the seed particles respectively the growing particles or granules in the reaction zone. Since the gas flow is modified due to reactions in the reaction zone e.g. HCI is present. Thus, the gas flow after the reaction zone respectively the vent gas is still valuable but contaminated. Continuous supply of new purchased feed medium/s would be very expensive and therefore would not allow SiC granules production in large scale.

The Chlorosilane production unit comprises according to a further preferred embodiment of the present invention a separating unit, in particular a distillation column, for separating one or multiple metals, in particular B, Al, Fe and/or P, from Chlorosilanes, in particular STC and/or TCS, generated by the bed reactor. This embodiment is beneficial since Si can be provided inside the bed reactor respectively inside the reaction chamber that comprises said metallic components.

The Chlorosilane production unit comprises according to a further preferred embodiment of the present invention a fluid outlet, wherein the fluid outlet is coupled by means of a pipe or hose for conducting the generated Chlorosilanes with the gas inlet unit of the CVD SiC production reactor for feeding the generated Chlorosilanes into the process chamber of the CVD SiC production reactor and/or with a gas inlet unit of a further CVD SiC production reactor for feeding the generated Chlorosilanes into the process chamber of the further CVD SiC production reactor. This embodiment is beneficial since new Chlorosilanes can be produced by using the vent gas and can be transferred after production back into the CVD SiC production reactor and/or can be used in a further CVD SiC production reactor.

The above mentioned object is also solved by a method for the production of Silicon Carbide (SiC) according to claim 8. The method for the production of Silicon Carbide (SiC) according to the present invention at least comprises the steps: Providing a CVD SiC production reactor, in particular according to any of claims 1 to 4, wherein the CVD SiC production reactor comprises a process chamber, wherein the process chamber at least surrounds a reaction zone for growing SiC, feeding one feed-medium or multiple feed-mediums via a gas inlet unit into the reaction zone of the process chamber for generating or providing a source medium and for generating a fluid flow, wherein the gas inlet unit is coupled with at least one feed-medium source, wherein a Si and C feed-medium source provides at least Si and C, in particular SiCl3(CH3), and wherein a carrier gas feed-medium source provides a carrier gas, in particular H2, or wherein the gas inlet unit is coupled with at least two feed-medium sources, wherein a Si feed medium source provides at least Si and wherein a C feed medium source provides at least C, in particular natural gas, Methane, Ethane, Propane, Butane and/or Acetylene, and wherein a carrier gas medium source provides a carrier gas, in particular H2, providing seed material particles into the reaction zone, in particular by means of a seed material particles providing unit, wherein the seed material particles preferably having at least a diameter between 20µm and 1000µm, forming the fluid flow in a manner to hold the seed material particles, in particular a defined amount of seed material particles, with the fluid flow for a defined minimum time of more than 5 seconds, in particular of more than 30 second, inside the reaction zone, for forming SiC granules by accumulating SiC and heating the source medium and the seed material particles inside the reaction zone to a temperature in the range between 1 100°C and 2200°C, in particular between 1300°C and 2000°C.

The seed material particles are according to a preferred embodiment of the present invention continuously provided into the process chamber by means of the seed material particles providing unit. This embodiment is beneficial since the production of SiC granules can be setup to an optimum, in particular an efficiency optimum or growth optimum.

The one feed-medium or multiple feed-mediums is/are according to a preferred embodiment of the present invention pre-heated by means of a gas pre-heating unit to a temperature above 700°C, in particular above 1100°C, prior to generating the fluid flow by feeding the one feed-medium or the multiple feed-mediums into the reaction zone via the gas inlet unit. The gas pre-heating unit preferably comprises a heat exchanger device for transferring heat from the vent gas to the one feed-medium or multiple feed-mediums and/or the carrier gas, in particular H2, provided by a carrier gas feed-medium source. This embodiment is beneficial since the high gas flow velocity through the reaction zone is possible without cooling the reaction zone by means of cold gas. Furthermore, due to a heat exchanger device energy of the vent gas can be reused to heat the one feed-medium or multiple feed-mediums and/or the carrier gas.

SiC granules are according to a preferred embodiment of the present invention removed by means of at least one turnstile device, in particular wing lock or rotary valve, from the process chamber. This embodiment is beneficial since it is possible to operate the turnstile device in a continuous manner or in a step wise manner, in particular in dependency of time and/or weight/force sensor signal. Thus, SiC granules can be removed in continuous or stepwise manner from the process chamber.

SiC granules preferably define in the context of the present inventions a plurality of SiC objects, wherein each SiC object having a maximum extension between two surface points between 2mm and 20cm or between 5mm and 10cm and preferably between 5mm and 19cm and highly preferably between 5mm and 17cm and most preferably between 5mm and 15cm or 10cm.

The seed material particles are according to a preferred embodiment of the present invention made of C or comprises at least 90% [mass] C, in particular at least 98% [mass] C and preferably at least 99% [mass] C and highly preferably at least 99,9% [mass] C and most preferably at least 99,99% [mass] C. This embodiment is highly beneficial since the mechanical strength of C is much smaller compared to SiC. Thus, the production of seed material particles comprising C causes much less wear and therefore much less contamination.

The seed material particles are according to a preferred embodiment of the present invention made of SiC or comprises at least 90% [mass] SiC, in particular at least 98% [mass] SiC and preferably at least 99% [mass] SiC and highly preferably at least 99,9% [mass] SiC and most preferably at least 99,99% [mass] SiC. This embodiment is beneficial since a SiC seed particle directly accumulates SiC.

It is additionally or alternatively possible that some seed material particles comprise SiC and some seed material particles comprise C and/or Si.

According to a preferred embodiment of the present invention a step of removing a vent gas mixture resulting from a reaction between the fluid flow of the one feed-medium or multiple feed-mediums and the seed material particles in the reaction zone from the process chamber via a vent gas outlet is carried out. This embodiment is beneficial since a high gas flow throughput through the reaction zone is possible.

At least a first fraction of the vent gas mixture is according to a preferred embodiment of the present invention HCI, wherein a second fraction of the vent gas mixture preferably consists of vent gas Chlorosilanes, in particular STC and/or TCS, wherein a third fraction of the vent gas mixture preferably comprises or consists of H2 and wherein a fourth fraction of the vent gas mixture comprises or consists preferably of at least one C-bearing-molecule, in particular methane.

According to a further preferred embodiment of the present invention the following steps are carried out: Providing solid Si inside a reactor chamber of a Chlorosilane production unit, wherein the solid Si comprises metal impurities of more than 1000ppmw, Forwarding at least the second fraction of the vent gas mixture into the reactor chamber and preferably the second fraction of the vent gas mixture and the third fraction of the vent gas mixture and one more fraction of the vent gas mixture and particular preferably at least the second fraction of the vent gas mixture and the first fraction of the vent gas mixture and most preferably all fractions of the vent gas mixture into the reactor chamber, and Generating Chlorosilanes inside the reactor chamber by reacting the second fraction of the vent gas mixture, in particular STC and/or TCS, and the solid Si and preferably by reacting at least the second fraction of the vent gas mixture and the first fraction of the vent gas mixture.

This solution is beneficial since vent gas fractions can be used to generate Chlorosilanes. Thus, the overall output can be increased and less feed gas needs to be delivered from a feed gas production plant. Therefore, less resource consumption takes place since less transportation takes place and also risks for accidents and therefore pollution are reduced.

In view of the present disclosure the term "reacting" has to be understood in terms of a chemical vapor deposition step.

A step of removing the generated Chlorosilanes from the Chlorosilane production unit is carried out according to a further preferred embodiment of the present invention. This embodiment is beneficial since the removed Chlorosilanes can be stored or forwarded to CVD SiC production reactor.

The following steps are preferably carried out according to a further preferred embodiment of the present invention: Forwarding at least the generated Chlorosilanes removed from the Chlorosilane production unit into a process chamber of the CVD SiC production reactor, and Forwarding at least one C-bearing molecule into the CVD SiC production reactor, Producing SiC inside the process chamber of the CVD SiC production reactor by reacting the generated Chlorosilanes and C from the at least one C-bearing molecule on at least one deposition surface. It is alternatively possible that the following steps are carried out: Forwarding at least the generated Chlorosilanes removed from the Chlorosilane production unit into a process chamber of a further CVD SiC production reactor, and Forwarding at least one C-bearing molecule into the further CVD SiC production reactor, Producing SiC inside the process chamber of the further CVD SiC production reactor by reacting the generated Chlorosilanes and C from the at least one C-bearing molecule on at least one deposition surface.

This solution is beneficial since vent gas fractions can be used to generate Chlorosilanes. Thus, the overall output can be increased and less feed gas needs to be delivered from a feed gas production plant. Therefore, less resource consumption takes place since less transportation takes place and also risks for accidents and therefore pollution are reduced.

In view of the present disclosure the term "reacting" has to be understood in terms of a chemical vapor deposition step.

A step of reducing the amount of metal impurities within the generated Chlorosilanes below 20ppmw and preferably below 10ppmw and highly preferably below 5ppmw and most preferably below 1ppmw is carried out according to a further preferred embodiment of the present invention. This embodiment is beneficial since SiC - without such metal impurities - can be used to produce a wide range of products, in particular in view of chips and power devices.

According to a further preferred embodiment of the present invention the step of reducing the amount of metal impurities within the generated Chlorosilanes below 20ppmw and preferably below 10ppmw and highly preferably below 5ppmw and most preferably below 1ppmw is carried out before the generated Chlorosilanes are forwarded into the process chamber of the CVD SiC production reactor or into the process chamber of the further CVD SiC production reactor or before the generated Chlorosilanes are removed from the Chlorosilane production unit. This embodiment is beneficial since contamination of the CVD SiC production reactor can be prevented. Thus, less downtime for cleaning or maintenance is necessary.

The step of reducing the amount of metal impurities, at least Fe impurities, AI impurities and/or all metal impurities, within the generated Chlorosilanes below 20ppmw and preferably below 10ppmw and highly preferably below 5ppmw and most preferably below 1ppmw is according to a further preferred embodiment of the present invention splitted into at least a first removal step and into a second removal step, wherein a first amount of metal impurities is removed in the first removal step and wherein a second amount of metal impurities is removed in a second removal step. This embodiment is beneficial since due to different metal impurities different conditions and/or techniques can be applied to remove the metal impurities, thus removing the metal impurities in multiple steps, in particular two or more than two steps, efficiency of the individual step can be increased.

Separating the generated Chlorosilanes and the third fraction of the vent gas mixture and the fourth fraction of the vent gas mixture into a first fluid and into a second fluid.

The step of reducing the amount of metal impurities, at least Fe impurities, AI impurities and/or all metal impurities, within the generated Chlorosilanes below 20ppmw and preferably below 10ppmw and highly preferably below 5ppmw and most preferably below 1ppmw and the step of separating the generated Chlorosilanes and the third fraction of the vent gas mixture and the fourth fraction of the vent gas mixture into a first fluid and into a second fluid are according to a further preferred embodiment of the present invention carried out by a separating unit.

The first removal step and the step of separating the generated Chlorosilanes and the third fraction of the vent gas mixture and the fourth fraction of the vent gas mixture into a first fluid and into a second fluid are carried out by a separating unit.

The second removal step is according to a further preferred embodiment of the present invention carried out by another device, in particular a further separating unit, in particular a Chlorosilane distillation column.

The step of reducing the amount of metal impurities within the generated Chlorosilanes below 20ppmw and preferably below 10ppmw and highly preferably below 5ppmw is according to a further preferred embodiment of the present invention carried out after the step of separating the generated Chlorosilanes and the third fraction of the vent gas mixture and the fourth fraction of the vent gas mixture into the first fluid and into the second fluid.

The vent gas mixture is according to a further preferred embodiment of the present invention feed from the CVD SiC production reactor to the reactor chamber, wherein the reactor chamber is part of a bed reactor, and/or from at least one further CVD SiC production reactor to the reactor chamber, wherein the reactor chamber is part of the bed reactor, wherein the step of generating Chlorosilanes by reacting the first fraction of the vent gas mixture and Si is carried out inside the bed reactor, and/or the step of generating chlorosilanes by reacting the second fraction of the vent gas mixture, in particular STC, and the third fraction of the vent gas mixture and the solid Si is carried out inside the bed reactor, wherein the bed reactor is preferably a fixed bed reactor or a fluidized bed reactor. This embodiment is beneficial since multiple fractions of the vent gas can be used to generate Chlorosilanes, in particular at the same time. Thus, less HCI treatment and less providing of new Chlorosilane is possible, causing the method according to the present invention to be highly efficient.

It is preferred to feed the vent gas mixture without chemical treatment into the bed reactor. Chemical treatment is herewith understood as any treatment that removes one component respectively substance from the vent gas mixture, in particular by distillation.

However, it is also possible to remove HCI or STC or TCS prior to the step of generating Chlorosilanes by reacting at least one fraction of the vent gas mixture and Si from the vent gas mixture. Preferably HCI can be removed. In this case the at least one fraction of the vent gas mixture reacting with Si is preferably STC. Alternatively, STC can be removed from the vent gas mixture prior to the step of Generating Chlorosilanes by reacting at least one fraction of the vent gas mixture and Si. In this case the at least one fraction of the vent gas mixture reacting with Si is preferably STC.

.The vent gas mixture is according to a further preferred embodiment of the present invention removed from the CVD SiC production reactor or from the at least one further CVD SiC production reactor in a heated configuration, wherein the vent gas mixture has a condensation temperature, wherein the vent gas mixture is kept above the condensation temperature.

Solid Si is according to a further preferred embodiment of the present invention feed during the step of generating Chlorosilanes by reacting HCI and Si into the bed reactor. This embodiment is beneficial since the bed reactor can be run in continuous manner and therefore could be coupled to multiple CVD SiC production reactors for generating Chlorosilanes based on the vent gas of said multiple CVD SiC production reactors.

According to a further preferred embodiment of the present invention solid Si is feed during the step of generating Chlorosilanes by reacting HCI and Si into the bed reactor. This embodiment is beneficial since the bed reactor can be operated in continuous manner.

The at least one C-bearing molecule is according to a further preferred embodiment of the present invention a fraction of the second fluid or the second fluid consists of the at least one C-bearing molecule, wherein the step of forwarding at least one C-bearing molecule into the process chamber comprises forwarding the second fluid into the process chamber. The second fluid preferably comprises methane. It is additionally possible that the step of forwarding at least one C-bearing molecule into the process chamber also comprises forwarding one C-bearing molecule, in particular the same C-bearing molecule, in particular methane, from another C-bearing molecule source, in particular from another methane source. This embodiment is beneficial since the C-bearing molecule from the vent gas can be used to produce SiC. However, in case that C-bearing molecule is not available in a sufficient mass or volume additional c-bearing molecule can be provided.

According to a further preferred embodiment of the present invention a step of removing HCI from the second fluid prior to the step of forwarding at least one C-bearing molecule into the process chamber is carried out. This embodiment is beneficial since the removed HCI can be used for the production of Chlorosilanes and therefore increases efficiency of the present invention.

According to a further preferred embodiment of the present invention a step of forwarding the first fluid from the separating unit to a further separating unit for separating the first fluid into at least a first part and a second part prior to the step of forwarding the Chlorosilanes into the process chamber. This embodiment is beneficial since undesired parts can be removed from the first fluid. Thus, according to a further preferred embodiment of the present invention the further separating unit preferably carries out the step of reducing the amount of metal impurities within the generated Chlorosilanes below 20ppmw and preferably below 10ppmw and highly preferably below 5ppmw, wherein the first part of said two parts comprises the Chlorosilanes and wherein the second part of said two parts comprises metal impurities removed during the step of reducing the amount of metal impurities within the generated Chlorosilanes below 20ppmw and preferably below 10ppmw and highly preferably below 5ppmw.

According to a further preferred embodiment of the present invention a step of forwarding the first fluid from the separating unit to a further separating unit for separating the first fluid into at least a first part and a second part prior to the step of forwarding the Chlorosilanes into the process chamber. The first part of said two parts preferably is or preferably comprises TCS (Trichlorosilane) and wherein the second part of said two parts preferably is or preferably comprises STC (Silicon tetrachloride).

The step of forwarding the Chlorosilanes into the process chamber comprises according to a further preferred embodiment of the present invention forwarding the first part of said two parts and/or forwarding the second part of said two parts into the process chamber or wherein the step of forwarding the Chlorosilanes into the process chamber consists of forwarding the first part of said two parts and/or forwarding the second part of said two parts into the process chamber. This embodiment is beneficial since Chlorosilanes provided by the vent gas and Chlorosilanes generated or produced inside the reactor chamber can be used to produce SiC.

The first storage and/or conducting element connects according to a further preferred embodiment of the present invention the separating unit with the further separating unit, wherein the further separating unit is coupled with a STC storage and a TCS storage, wherein the STC storage and/or the TCS storage forms a section of a Chlorosilanes mass flux path for conducting STC and/or TCS into the process chamber. This embodiment is beneficial since supply of Chlorosilanes removed from the vent gas and produced by reacting one or multiple fraction/s of the vent gas with Si into the process chamber does not depend on the actual output from the reactor chamber, since the necessary mass or volume or Chlorosilanes can be removed from the respective storage, namely the STC storage and/or the TCS storage).

The further separating unit is according to a further preferred embodiment of the present invention a distillation column. This embodiment is beneficial since distillation columns are very reliable and are able to handle high troughput.

STC is according to a further preferred embodiment of the present invention feed from the further separating unit, in particular the distillation column, to the STC storage and wherein TCS is feed from the further separating unit, in particular distillation column, to the TCS storage.

According to a further preferred embodiment of the present invention metal chlorides (such as FeCl3 or AlCl3) leave the reactor chamber, in particular of the bed reactor, in the form of particles or in the gas phase, depending on the conditions. Particulate solid metal chlorides can be discharged e.g. via solid separation (cyclones, filters). It is herewith referred to document DE2161641A1, since document DE2161641A1 discloses e.g. a separating device or a further separating device, in particular distillation column.

Gaseous metal chlorides are according to a further preferred embodiment of the present invention carried on towards condensation and form a solution and/or suspension that can be separated by distillation. The resulting metal-rich heavy-boiling fraction is preferably discharged.

STC is according to a further preferred embodiment of the present invention feed from the STC storage to the CVD SiC production reactor, without feeding TCS from the TCS storage to the bed reactor. This embodiment is beneficial since the fractions of STC which are part of the vent gas can be reacted to TCS inside the bed reactor.

According to a further preferred embodiment of the present invention a buffer storage is arranged or provided in fluid flow direction before the reactor chamber, in particular of the bed reactor. This embodiment is beneficial since the buffer storage can store the vent gas outputted by the SiC CVD reactor for continuous supply to the reactor chamber. The vent gas inside the buffer storage is preferably heated or held above the condensation temperature of the vent gas respectively above the lowest condensation temperature of the individual fractions of the vent gas.

The distillation column separates according to a further preferred embodiment of the present invention one or multiple metallic components, in particular B, Al, Fe and/or P, from the first fluid, in particular prior to the separation of STC and TCS, wherein separated metallic component/s is/are preferably feed to a waste storage. This embodiment is beneficial since Si can be provided inside the bed reactor respectively inside the reaction chamber that comprises said metallic components.

TCS is according to a further preferred embodiment of the present invention feed from the TCS storage to the bed reactor for converting at least a fraction of TCS into STC or STC is according to a further preferred embodiment of the present invention feed from the STC storage to the bed reactor for converting at least a fraction of STC into TCS. This embodiment is beneficial since multiple reactions can be carried out inside the bed reactor, in particular at the same time.

According to a further preferred embodiment of the present invention a step of generating Chlorosilanes is carried out inside the reactor chamber by reacting the first fraction of the vent gas mixture and the solid Si. This embodiment is beneficial since multiple fractions of the vent gas are used to react with Si for the production of Chlorosilanes. Thus, the overall efficiency of the present solution is very high.

The above-mentioned object is also solved by a SiC and Chlorosilane production system according to claim 19. The SiC and Chlorosilane production system according to the present invention comprises at least a Chlorosilane production unit, wherein the Chlorosilane production unit comprises at least a bed reactor, in particular a fixed bed reactor or a fluidized bed reactor, for generating Chlorosilanes by reacting at least one fraction of a vent gas mixture provided via a vent gas outlet of a CVD SiC production reactor and Si, wherein further fractions of the vent gas mixture at least comprise H2 and a C-bearing molecule, in particular methane, and wherein Si is provided as solid inside the bed reactor and a CVD SiC production reactor, in particular SiC fluidized bed reactor, according to any of claims 1-4 for the production of SiC, wherein the Chlorosilane production unit and the CVD SiC production reactor are at least coupled via a conduit, in particular a pipe, for feeding the Chlorosilanes generated by means of the Chlorosilane production unit to the CVD SiC production reactor for the production of SiC. It is possible that the vent gas is provided by the same CVD SiC production reactor that receives the generated Chlorosilanes. However, it is also possible that the vent gas is provided by another CVD SiC production reactor. The other CVD SiC production reactor can be another type or the same type of CVD SiC production reactor as the CVD SiC production reactor receiving the generated Chlorosilans. The other CVD SiC production reactor can comprise one or multiple resistance heated growth substrate/s.

None-limiting examples of the present invention are explained with respect to the figures, therein show:
- Fig.: 1aschematically an example of a CVD SiC production reactor according to the present invention,
- Fig. 1b: schematically feeding of seed particles into the reaction zone and growing of SiC granules inside the reaction zone,
- Fig. 1c: schematically shows a definition of the term "maximum extension between two surface points",
- Fig. 2-9: schematically different examples of SiC and Chlorosilane production systems according to the present invention.

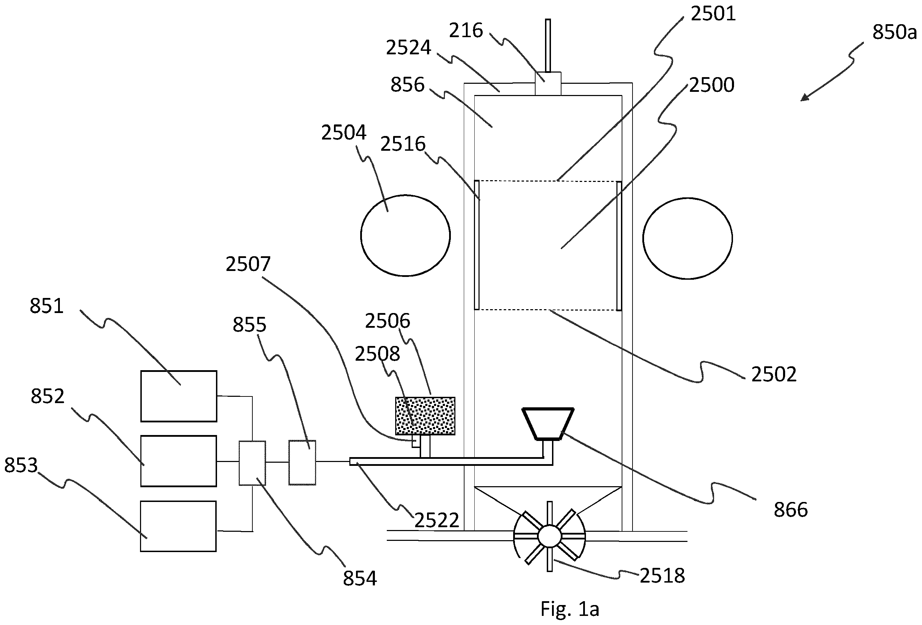

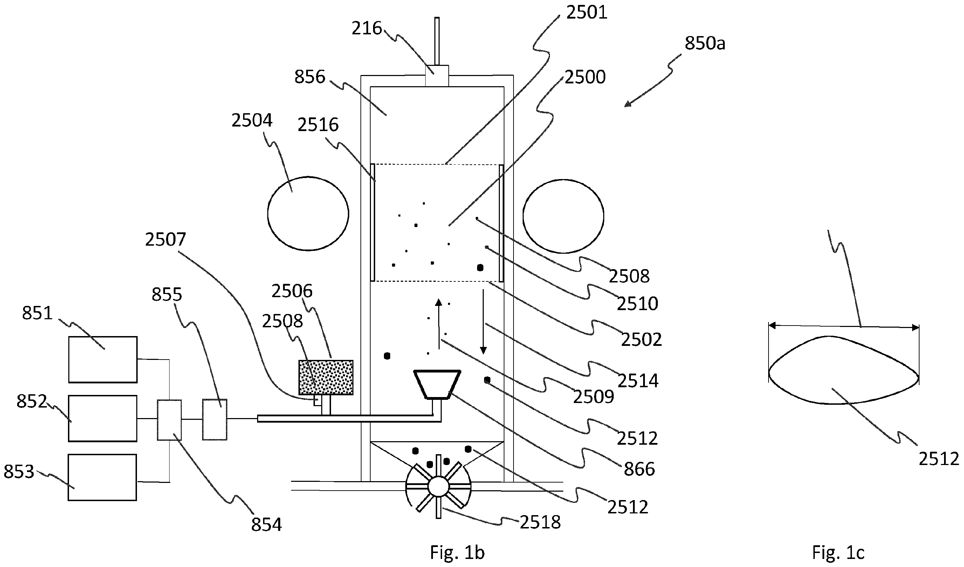

Fig. 1 shows an example of a CVD SiC production reactor 850, in particular SiC fluidized bed reactor 850a, according to the present invention. The CVD SiC production reactor 850a comprises a process chamber 856, wherein the process chamber 856 at least surrounds a reaction zone 2500 for growing SiC, A gas inlet unit is provided in a lower region of the process chamber 856, in particular below the reaction zone 2500. The gas inlet unit 866 is a gas inlet unit for feeding one feed-medium or multiple feed-mediums into the reaction zone of the process chamber 856 for generating or providing a source medium and for generating a fluid flow, wherein the gas inlet unit 866 is coupled with at least one feed-medium source 851, wherein a Si and C feed-medium source 851 provides at least Si and C, in particular SiCl3(CH3), and wherein a carrier gas feed-medium source 853 provides a carrier gas, in particular H2. Alternatively the gas inlet unit 866 is coupled with at least two feed-medium sources 851, 852, wherein a Si feed medium source 851 provides at least Si and wherein a C feed medium source 852 provides at least C, in particular natural gas, Methane, Ethane, Propane, Butane and/or Acetylene, and wherein a carrier gas medium source 853 provides a carrier gas, in particular H2. Reference number 2506 refers to a seed material particles providing unit 2506 for providing seed material particles 2508 into the reaction zone 2500, wherein the seed material particles having at least a diameter between 20µm and 1000µm. The seed material particles providing unit 2506 is preferably coupled with the gas inlet unit 866 to feed the seed particles as part of the gas flow into the process chamber 856, in particular into the reaction zone 2500. However, it is additionally or alternatively possible to provide the seed material particles providing unit 2506 above the reaction zone 2500, wherein the seed particles can fall from above the reaction zone 2500 into the reaction zone. The reaction zone 2500 is preferably understood as a volume inside the process chamber 856 in which the conditions for chemical vapor deposition can be setup during operation of the CVD SiC production reactor 850. The boundaries of the reaction zone 2500 are schematically indicated by reference number 2501 and 2502, wherein 2501 indicates an upper boundary of the reaction zone 2500 and wherein 2502 indicates a lower boundary of the reaction zone 2500. The side walls of the reaction zone 2500 are preferably covered by or made of or comprise an insulation material. Thus, the reaction zone 2500 is at least partially surrounded by one or multiple insulating sections 2516, wherein the one or multiple insulating sections 2516 is /are arranged in a tube-like manner forming a fluid flow entering section 2502 for fluid flow entering at least one fraction of the reaction zone 2500 and a fluid flow output section 2501 for fluid flow exiting the at least one fraction of the reaction zone 2500.

The seed material particles providing unit 2506 is preferably configured to continuously feed seed material particles 2508 into the process chamber 856. In the shown example the seed material particles providing unit 2506 is coupled with a conduit or pipe 2522 for feeding the feed medium/s into the process chamber 856. An actuator, in particular an electric motor, 2507 for continuously or stepwise forwarding seed particles 2508.

Fig. 1b shows that the reaction zone 2500 and the gas inlet unit 866 are preferably configured to form the fluid flow in a manner to hold the seed material particles 2508, in particular a defined amount or mass of seed material particles 2508 or growing SiC granules 2510, with the fluid flow 2509 for a defined minimum time of more than 5 seconds, in particular of more than 30 seconds, inside the reaction zone 2500 for forming SiC granules 2512 by accumulating SiC. Reference number 2510 refers to a SiC granule respectively piece that comprises more mass compared to the seed particle but less mass compared to a finally grown SiC granule 2512 respectively piece. The finally grown SiC granules 2512 are preferably moving in opposite direction 2514 of the gas flow 2509, in particular via the lower boundary 2502 of the reaction zone 2500 out of the reaction zone 2500.

Additionally, fig. 1a and 1b show a at least one turnstile device 2518, provided in a section below the reaction zone 2500 for removing SiC granules 2512 from the process chamber 856.

Fig. 1a and 1b show an heating unit 2504, in particular an inductive heating unit 2504, at least arranged in sections around the reaction zone 2500 for heating the source medium and the seed material particles 2508 inside the reaction zone 2500 to a temperature in the range between 1300°C and 2000°C.

A vent gas outlet 216 for removing a vent gas mixture resulting from a reaction between the fluid flow of the one feed-medium or multiple feed-mediums and the seed material particles 2508 respectively the growing SiC granules 2510 in the reaction zone 2500 from the process chamber 856 is provided. The vent gas outlet is preferably arranged above the reaction zone 2500 and preferably in a top wall section 2524 of the process chamber 856

The reference sign 854 indicates a preferably optional mixing device or a mixer by which the source fluids and/or the carrier fluid can be mixed with one another, in particular in predetermined ratios. The reference sign 855 indicates a gas pre-heating unit, wherein the gas pre-heating unit 855 can be or can comprise an evaporator device or an evaporator by which the fluid mixture which can be supplied from the mixing device 854 to the evaporator device 855 can be evaporated. The gas pre-heating unit 855 can be formed by a heat exchanger or can comprise a heat exchanger for transferring heat from a vent gas of the SiC production device 850a to the fluid mixture supplied by the mixing device 854. The gas pre-heating unit 855 is preferably configured to heating the one feed-medium or multiple feed-mediums to a temperature above 700°C, in particular above 1100°C. The gas pre-heating unit 855 is preferably configured to pre-heat the one feed-medium or multiple feed-mediums prior to generating the fluid flow by feeding the one feed-medium or the multiple feed-mediums into the reaction zone 2500 by means of the gas inlet unit 866.

SiC production device 850a for producing SiC material, in particular 3C-SiC material, in particular 3C-SiC granular material. This device 850 preferably comprises a first feeding device 851, a second feeding device 852 and a third feeding device 853. The first feed device 851 is preferably designed as a first mass flow controller, in particular for controlling the mass flow of a first source fluid, in particular a first source liquid or a first source gas, wherein the first source fluid preferably comprises Si, in particular e.g. silanes/chlorosilanes of the general composition SiH4-mClm or organochlorosilanes of the general composition SiR4-mClm (where R = hydrogen, hydrocarbon or chlorohydrocarbon). The second feed device 852 is preferably designed as a second mass flow controller, in particular for controlling the mass flow of a second source fluid, in particular a second source liquid or a second source gas, wherein the second source fluid preferably comprises C, e.g. hydrocarbons or chlorohydrocarbons, preferably with a boiling point < 100 °C, particularly preferably methane. The third feed device 853 is preferably designed as a third mass flow controller, in particular for controlling the mass flow of a carrier fluid, in particular a carrier gas, wherein the carrier fluid or carrier gas preferably comprises H or H2, respectively, or mixtures of hydrogen and inert gases.

Fig. 1c shows schematically an example how the "maximum extension between two surface points" of a SiC granule 2512 respectively SiC piece 2512 is used in the context of the present invention. The maximum extension between two surface points is indicated by reference number 2520.

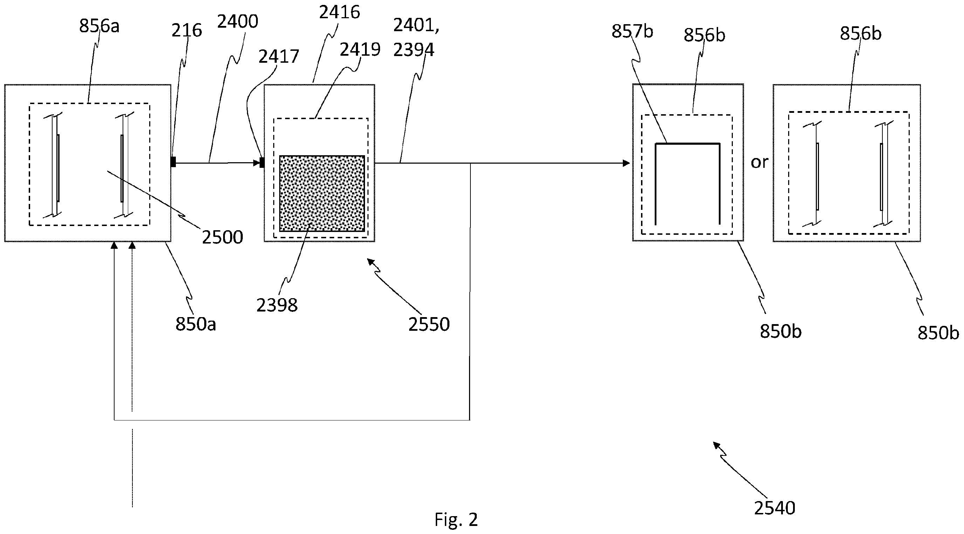

Fig. 2 shows an example of a system according to the present invention. Said system comprises at least one CVD SiC reactor 850a (reference numbers 850a and 850b in case of multiple CVD SiC reactors) and at least on reactor, in particular a bed reactor 2416, for reaction Si and one or more than one fractions of the vent gas of the CVD SiC reactor 850a to produce Chlorosilanes, in particular STC and/or TCS. It is possible to forward Chlorosilanes produced inside the reactor 2416 to the CVD SiC reactor 850a that provided the vent gas for the Chlorosilane production. Additionally or alternatively it is possible to forward the generated Chlorosilanes to another CVD SiC reactor 850a/850b, that means of the same type (bed reactor) or of another type (with resistively heated growth substrate).

According to the present invention a CVD SiC reactor 850b preferably comprises at least one process chamber 856a/b and at least one and preferably multiple SiC growth substrates 857a/b arranged respectively arrangeable inside the CVD SiC reactor 850a/b. The CVD SiC reactor 850a/b preferably comprises at least or exactly one vent gas outlet 216, wherein said vent gas outlet 216 is preferably directly or indirectly coupled via a vent gas conduit 2400 with a gas inlet 2417 of reactor 2416. Reactor 2416 comprises a reactor chamber 2419, wherein solid Si 2398 is provided inside the reactor chamber 2419. The solid Si 2398 is preferably provided in form of particles.

The solid Si 2398 particles preferably have a length between 1mm and 50mm and preferably between 1mm and 40mm and highly preferably between 1mm and 15mm and most preferably between 1mm and 5mm or 10mm. The solid Si 2398 is preferably crushed by means of a crusing device (not shown). The crushing device can be part of the present system. The crushing device is preferably a jaw crusher or a water pulse crusher. The crushing device preferably continuously provides Si particles. This also applies to following figures.

With respect to fig. 2 and the remaining figures it must be noted that fluid outlet 216 and fluid inlet 2417 are schematically shown only, other fluid inlets and/or outlets do not have to be explicitly mentioned and/or shown.

The reactor 2416 preferably outputs at least Chlorosilanes 2394. The arrows indicate that the Chlorosilanes 2394 can be fed into CVD SiC reactor 850a and/or 850b.

Additionally the dotted arrow shows that further substances can be optionally fed into the CVD SiC reactor 850a (the same applies to the further CVD SiC reactor 850b). The further substances can be e.g. a c-bearing molecule, in particular CH4 (methane), and/or H2 (hydrogen). It is also possible to feed the further substance/s via the same inlet via which the Chlorosilanes are fed into the CVD SiC reactor 850.

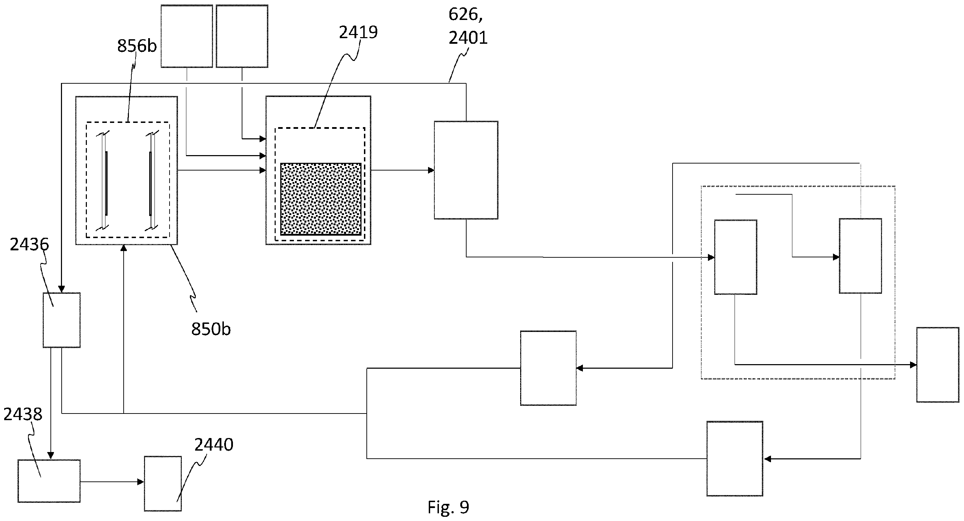

According to a further preferred embodiment of the present invention an exchange device 2460 is optionally provided for exchanging 3-15% Vol. of the second fluid 626. The second fluid 626 preferably comprises H2, Methane, HCI, Chlorosilane, wherein the ration of the composition ((H2:Methane:HCl:Chlorosilane) of the second liquid is preferably between 3:1:0,1:0,1 Vol. and 7:1:0,1:0,1 Vol. it is alternatively possible to provide an absorber device (cf. fig. 9 ref. 2436) for removing further impurities, e.g. phosphor, dust and/or metal/s. Both the exchange device 2460 and the absorber device 2436 are optional but could be also part of the following figures. With respect to the exchange device 2460 it is also possible to establish that functionality by removing 3-15% Vol of the second fluid 626 and adding the same amount of the removed substances via one or more other input devices, in particular input path 2462. Thus, it is possible that the exchange device 2460 is only a removing device for removing 3-15% Vol. of the second fluid 626. This also applies to following figures.

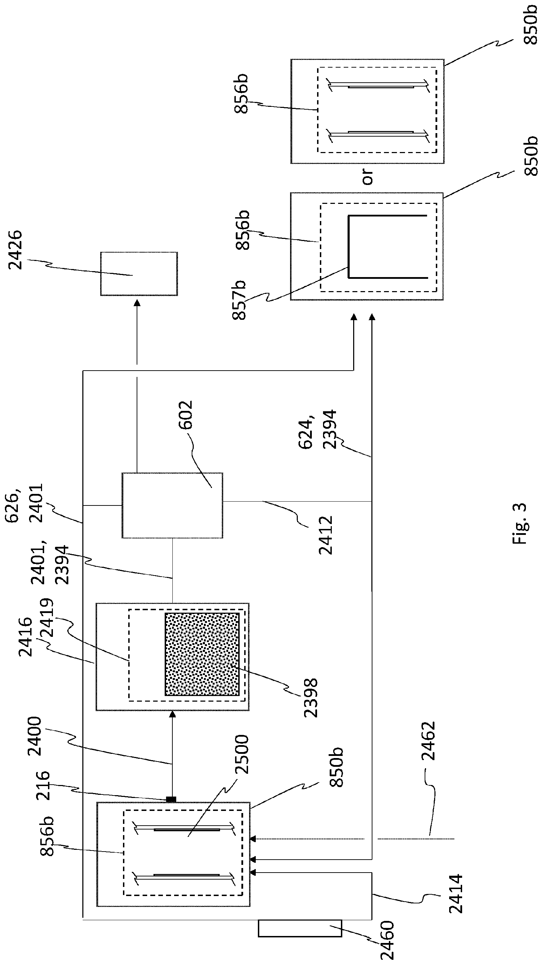

Fig. 3 shows a further detailed example of the system according to the present invention. According to fig. 3 a separating unit 602 is provided downstream the reactor 2416. The separating unit 602 is preferably configured for separating the generated Chlorosilanes 2394 and the third fraction 2401 of the vent gas mixture 2400 and the fourth fraction of the vent gas mixture 2400 into a first fluid 624 and into a second fluid 626. The first fluid 624 is preferably fed to a storage unit, in particular a first fluid storage unit 2412, or to the CVD SiC reactor 850a and/or to another CVD SiC reactor 850b. The second fluid 626 is preferably fed to another storage unit, in particular a second fluid storage unit 2414, or to the CVD SiC reactor 850a and/or to another CVD SiC reactor 850b.

Additionally, the separating unit 602 could be configured according to a further preferred embodiment for reducing the amount of metal impurities within the generated Chlorosilanes below 20ppmw and preferably below 10ppmw and highly preferably below 5ppmw and most preferably below 1 ppmw. The removed metal impurities are preferably feedable to a waste storage 2426.

Additionally the dotted arrow 2462 shows that further substances can be optionally fed into the CVD SiC reactor 850a (the same applies to the further CVD SiC reactor 850b). The further substances can be e.g. a c-bearing molecule, in particular CH4 (methane), and/or H2 (hydrogen). Additionally, it is possible to feed the Chlorosilanes and the second fluid via a common gas inlet into the CVD SiC reactor. It is also possible to feed the further substance/s via the same inlet via which the Chlorosilanes and/or the second liquid is/are fed into the CVD SiC reactor 850. This also applies to following figures.

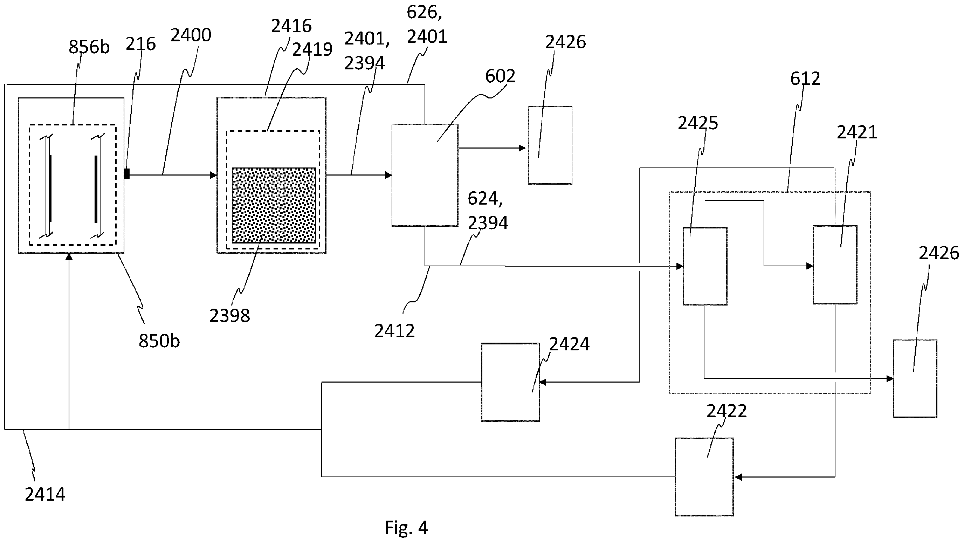

Fig. 4 shows a further detailed example of the system according to the present invention. The further CVD SiC reactor 850b is not shown in this figure, however it has to understood that the treated vent gas fraction could be additionally or alternatively provided to such a further CVD SiC reactor 850b in case such a further CVD SiC reactor 850b is desired (this also applies to the further figures).

Even if a waste storage 2426 is provided after the metal removing device 2425 it is still possible that separating unit 602 is also connected to said waste storage 2426 or to another waste storage.

The further separating unit 612 preferably comprises a metal removing device 2425, wherein the metal removing device 2425 preferably removes remaining metal impurities from the first fluid 624. The first fluid 624 is preferably fed from the metal removing device 2425 to a STC and TCS dividing device 2421. Alternatively, the first fluid could be fed into the CVD SiC reactor 850a. STC is preferably stored in a STC storage 2422 and TCS is preferably stored in a TCS storage 2424.

The further separating unit 612 could be configured according to a further preferred embodiment for reducing the amount of metal impurities, in particular B, Al, P, Ti, V, Fe and/or Ni, within the first fluid 624, in particular the Chlorosilanes below 20ppmw, in particular of one or multiple or all of the metals B, Al, P, Ti, V, Fe and/or Ni, and preferably below 10ppmw, in particular of one or multiple or all of the metals B, Al, P, Ti, V, Fe and/or Ni, and highly preferably below 5ppmw, in particular of one or multiple or all of the metals B, Al, P, Ti, V, Fe and/or Ni, and most preferably below 1ppmw, in particular of one or multiple or all of the metals B, Al, P, Ti, V, Fe and/or Ni. The removed metal impurities are preferably feedable to a waste storage 2426.

TCS and/or STC can be fed from STC storage 2422 and/or TCS storage 2424 into the CVD SiC reactor 850. Volume or mass of the STC and/or TCS which is fed into the CVD SiC reactor is preferably controlled, in particular by means of a mass flux controller respectively one mass flux controller for STC and /or one mass flux controller for TCS.

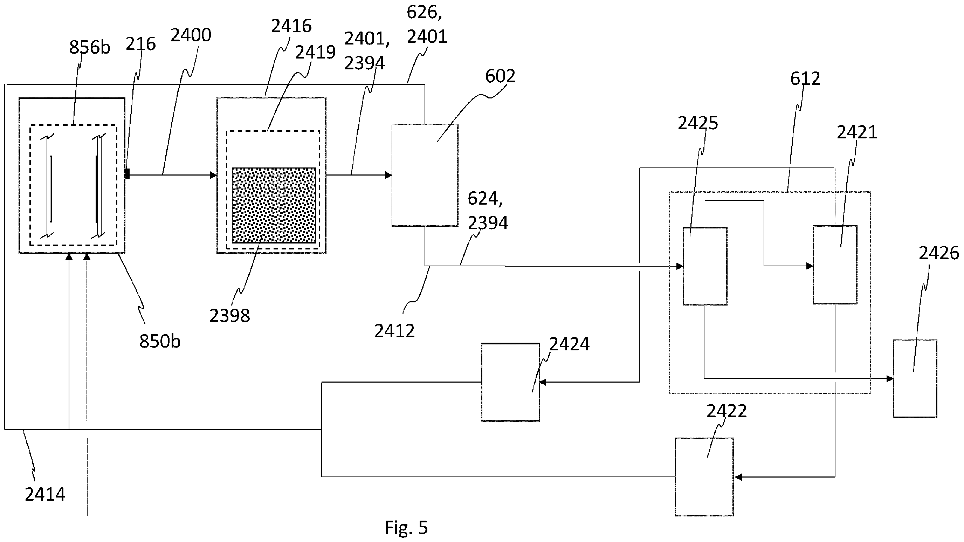

Fig. 5 schematically indicates that the separating unit 602 is not or not directly coupled with a waste storage 2426, in particular it is possible that the separating unit 602 is not configured for separating or removing metal impurities. Alternatively it is possible to remove the amount of metal impurities within the generated Chlorosilanes only with the further separating unit 612 below 20ppmw and preferably below 10ppmw and highly preferably below 5ppmw and most preferably below 1ppmw.

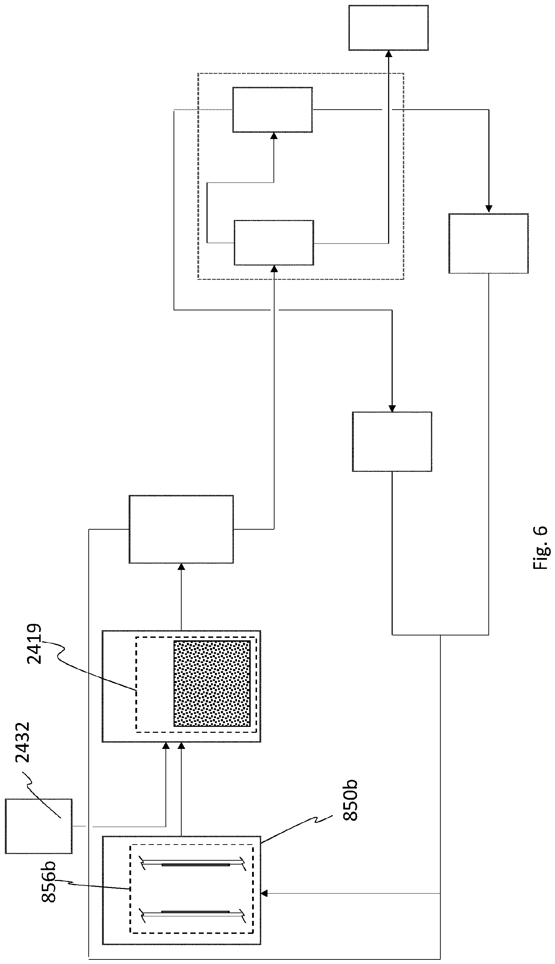

Fig. 6 schematically shows that a Si supply unit 2432 can be part of the inventive system. The Si supply unit 2432 is preferably a Si storage for storing and providing Si particles. Alternatively the Si supply unit 2432 can be a crushing device, in particular a jaw crusher and/or a water pulse crusher. However, it is also possible that the Si supply unit 2432 comprises a Si storage for storing and providing Si particles and a crusher device, in particular a jaw crusher and/or a water pulse crusher, for crushing Si.

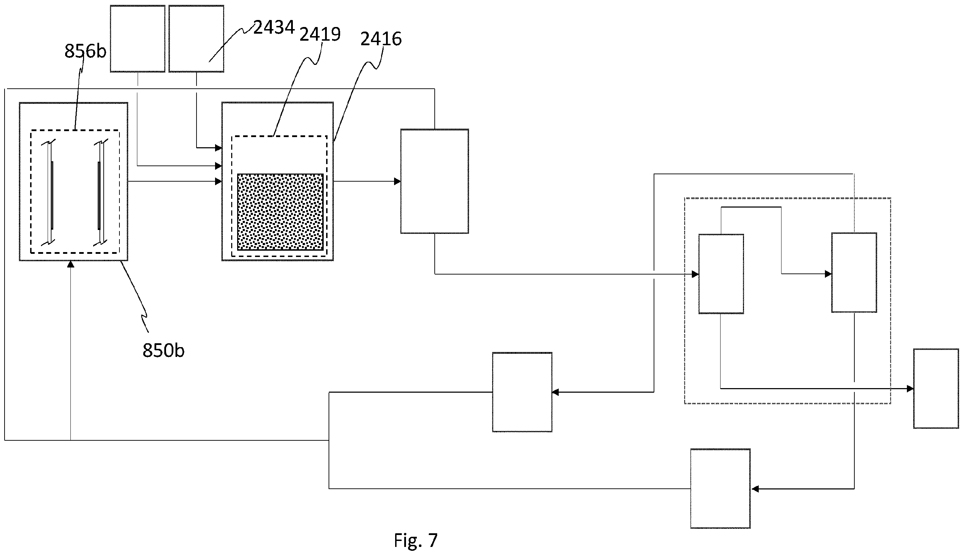

Fig. 7 schematically shows that - additionally to the Si supply unit 2432- a HCI supply unit 2434 can be provided for supplying HCI, in particular from a HCI storage, into the reactor 2416. It is also possible that the HCI supply 2434 is present in case no Si supply unit 2432 is provided. The HCI supply unit 2434 can be used to add the amount of HCl removed from the system, in particular removed by the exchange device 2460 (cf. Fig. 2) respectively removing device.

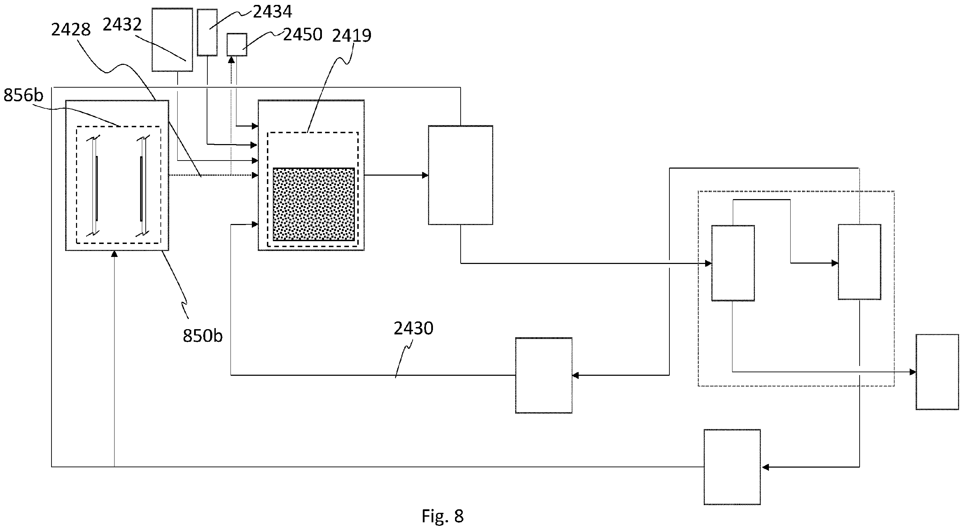

Fig. 8 shows Si supply unit 2432, HCI supply unit 2434 and a vent gas storage unit 2450 coupled to the reactor 2416. It has to be understood that the Si supply unit 2432, the HCI supply unit 2434 and the vent gas storage unit 2450 are optional. However, it is possible to have one of them or two of them or all of them present according to the invention. The vent gas storage unit 2450 is configured to store vent gas and to provide vent gas, in particular above the condensation temperature of the vent gas. This embodiment is beneficial since during start up and/or shut down of the CVD SiC reactor 850 a continuous vent gas supply to the reactor 2416 can be established. Thus, the production of Chlorosilanes can take place even if the CVD SiC reactor does not provide vent gas.

Additionally or alternatively, HCI can be supplied during start up and/or shut down of the CVD SiC reactor 850. Since HCI reacts with Si to Chlorosilanes.

Additionally or alternatively Chlorosilanes, in particular TCS, are supplied to the reactor 2416, in particular from TCS storage 2422.

A combined supply of Chlorosilanes, in particular TCS, preferably from TCS storage 2422, and HCI, preferably from HCI supply 2434, to the reactor 2416 is also possible.

Furthermore, in the case of HCI, vent gas or Chlorosilane supply further Chlorosilanes are produced.

It is further possible to supply a c-bearing molecule, in particular methane, and H2 into the reactor, in particular for holding the reactor in an idle state. It is herewith beneficial to also heat the reactor 2416, in particular the reactor chamber 2419.

All that optional or additional supply steps are beneficial since the reactor 2416 does not have to shut down during start up or shut down of the CVD SiC reactor.

Reference number 2428 indicates a paused/reduced vent gas mixture feeding from the CVD SiC reactor e.g. due to start up or shut down phase.

Fig. 9 shows that the second fluid 626 can be fed through an absorber device 2436 for removing phosphor, dust and/or metal impurities. The removed substances are preferably fed into a washer 2438 and the resulting substances can be burned in a combustion unit 2440, in particular a flare. The combustion unit 2440 is preferably used to provide heat for heating the reactor 2416, in particular in case no exothermic reaction takes place inside the reactor 2416 or in case the reactor is in a start up phase.

The systems described with respect to Fig. 2 to 9 are able to carry out a preferred method of the present invention for the production of SiC. Said method preferably comprises at least the steps:
Providing a vent gas mixture 2400, wherein the vent gas mixture 2400 is preferably generated during SiC production and highly preferably generated during CVD SiC production, wherein at least a first fraction of the vent gas mixture is HCI, wherein a second fraction of the vent gas mixture consists of vent gas Chlorosilanes, in particular STC and/or TCS, wherein a third fraction 2401 of the vent gas mixture 2400 comprises or consists of H2 2402 and wherein a fourth fraction of the vent gas mixture 2400 comprises or consists of at least one C-bearing-molecule, in particular methane, 2404. The method preferably also comprises a step of providing solid Si inside a reactor chamber, wherein the solid Si comprises metal impurities of more than 1000ppmw. The method preferably also comprises a step of forwarding at least the second fraction of the vent gas mixture 2400 and the third fraction of the vent gas mixture 2400 into the reactor chamber and/or the first fraction of the vent gas mixture 2400. The method preferably also comprises a step of generating Chlorosilanes inside the reactor chamber by reacting the second fraction of the vent gas mixture, in particular STC and/or TCS, and the third fraction 2401 of the vent gas mixture 2400 and the solid Si and/or by reacting the first fraction of the vent gas mixture 2400 and the solid Si.

The method preferably also comprises the steps: Forwarding at least the generated Chlorosilanes 2394 into a process chamber 856a of the CVD SiC production reactor 850a, and forwarding at least one C-bearing molecule into the CVD SiC production reactor 850a, and producing SiC inside the process chamber 856a of the CVD SiC production reactor 850a by reacting the generated Chlorosilanes and C from the at least one C-bearing molecule on at least one deposition surface. Alternatively the method preferably also comprises the steps: Forwarding at least the generated Chlorosilanes 2394 into a process chamber 856b of a further CVD SiC production reactor 850b, and forwarding at least one C-bearing molecule into the further CVD SiC production reactor 850b, and producing SiC inside the process chamber 856 of the further CVD SiC production reactor 850b by reacting the generated Chlorosilanes and C from the at least one C-bearing molecule on at least one deposition surface.

With respect to the before mentioned figures the process according to the present invention can be divided into a phase "during operation of the CVD SiC reactor" and a phase "during start up or shutdown". By means of example, both phases are described in the following with additional or alternative features (with respect to the description of Fig. 2-9).

During operation of the SiC CVD reactors under deposition of SiC, the process gas preferably comprises or consisting of STC, TCS, H2, CH4 and HCI. The process gas leaves the SiC CVD reactor chamber as "vent gas" and is preferably cooled down to a temperature of about 200°C, in particular by means of heat exchangers. This vent gas stream remains completely in gas phase. The complete vent gas stream is then continuously fed into the reactor, in particular bed reactor and preferably fixed bed reactor. The reactor preferably comprises a steel vessel, in particular with dimensions of more than 5m height and preferably of 8 m height or of more than 8m height and highly preferably of 10m or more than 10m height, and a diameter of 1m or of more than 1m, in particular of 1,5m or of more than 1,5m or preferably of 2m or of more than 2m or between 1,7m and 2,3m. In the reactor there is a bed of silicon. The vent gas is introduced in the lower part of the reactor, which allows the vent gas to flow optimally through the silicon bed. The contact of the gas phase with silicon leads to an exothermic chemical reaction with the formation of a new STC, TCS, H2, CH4 and HCI gas mixture, in which the HCI content is significantly reduced and the chlorosilane content, comprising or consisting of STC and/or TCS, is increased. The silicon bed is preferably kept at a temperature of 400-450°C and a pressure between 1,2 and 2 bar, in particular 1.5 bar, which ensures optimum HCI conversion. The proportion of chlorosilanes in gas phase increases in the reactor with degradation of silicon. To cool the reactor chamber in the reactor, the reactor is preferably operated with a cooling water jacket.

Furthermore, liquid chlorosilane mixture of STC and/or TCS can be introduced in the upper part of the reactor. On the one hand, this process serves to cool the reaction chamber and thus to control the reaction temperature, and on the other hand, metal chloride constituents, such as ferric chloride and aluminum chloride, are thereby transferred from the gas phase to a solid particle form.

After vent gas leaves the reactor, the solid components formed are preferably separated from the gaseous fluid, in particular by means of a solids separation system preferably using cyclones and/or filters.

In addition, a downstream gas scrubber can be provided, which is preferably operated with liquid chlorosilane. This embodiment is beneficial since it ensures that even very small solid components can be washed out of the gas stream, thus further reducing the metal chloride content of the fluid.

After separation of the solid components from the gas stream, the condensable components of the process gas are preferably liquefied by cooling. The liquid phase is preferably separated and contains mainly the chlorosilanes STC and TCS as well as dissolved portions of HCI, H2 and CH4 and trace components of chlorosilane boilers, such as hexachlorodisilane, and metal chlorides.

The gas phase preferably comprises or consists predominantly of H2, CH4 and minor amounts of HCI, STC and TCS.

For further purification of the chlorosilanes from metal chlorides and separation into the individual components STC and TCS, the liquid phase is preferably subjected to one or multiple further distillation steps and purified STC and/or TCS is/are collected individually in tanks.

The gas phase is preferably returned to the CVD SiC reactor or another CVD SiC reactor or a storage unit, in particular a tank, after separation of liquid components.

Preferably no process gas leaves the SiC CVD reactor chamber during start up or shut down phases of the SiC CVD reactor/s. No CVD SiC reactor vent gas flow can be continuously introduced into the reactor if taken directly from the CVD SiC reactor.

The reactor preferably is a steel vessel with dimensions of 10m in height and a diameter of about 2m. In the reactor 2416 there is a bulk of silicon 2398. Gas comprising or consisting mainly of H2 and CH4 and small amounts of STC, TCS and HCI is introduced in the reactor, in particular in the lower part of the reactor 2416. The bulk silicon 2398 is preferably maintained at a temperature of 400-450°C and a pressure of 1.5 bar. Due to the lack of exothermic reaction between silicon, HCI and chlorosilanes, to heat the bulk of silicon 2398 in the reactor, the gas is preferably heated up to 800°C or to a temperature between 700°C and 900, in particular to a temperature between 750°C and 850°C, in particular at the gas inlet or prior to the gas inlet.

After vent gas leaves the reactor, the solid components formed are preferably separated from the gaseous fluid, in particular by means of a solids separation system preferably using cyclones and/or filters.

In addition, a downstream gas scrubber can be provided, which is preferably operated with liquid chlorosilane. This embodiment is beneficial since it ensures that even very small solid components can be washed out of the gas stream, thus further reducing the metal chloride content of the fluid.

After separation of the solid components from the gas stream, the condensable components of the process gas are preferably liquefied by cooling. The liquid phase is preferably separated and contains mainly the chlorosilanes STC and TCS as well as dissolved portions of HCI, H2 and CH4 and trace components of chlorosilane boilers, such as hexachlorodisilane, and metal chlorides.

The gas phase preferably comprises or consists predominantly of H2, CH4 and minor amounts of HCI, STC and TCS.

For further purification of the chlorosilanes from metal chlorides and separation into the individual components STC and TCS, the liquid phase is preferably subjected to one or multiple further distillation steps and purified STC and/or TCS is/are collected individually in tanks.

The gas phase is preferably returned to the CVD SiC reactor or another CVD SiC reactor or a storage unit, in particular a tank, after separation of liquid components.

Thus, the present invention refers to a SiC and Chlorosilane production system 2540, comprising at least one CVD SiC production reactor 850, in particular SiC fluidized bed reactor 850a, in particular according to claim 4, and a Chlorosilane production unit 2550, wherein the Chlorosilane production unit 2550 comprises at least a bed reactor 2416, in particular a fixed bed reactor or a fluidized bed reactor, for generating Chlorosilanes by reacting at least one fraction of the vent gas mixture provided via the vent gas outlet 216 of the CVD SiC production reactor 850 and Si, wherein further fractions of the vent gas mixture at least comprise H2 and a C-bearing molecule, in particular methane, and wherein Si is provided as solid 2398 inside the bed reactor 2416.

**List of reference numbers**

| | | | |
|---|---|---|---|
| | | 855 | evaporator device / gas pre-heating unit |
| 216 | vent gas outlet | 856 | process chamber |
| 602 | separating unit | 866 | gas inlet unit |
| 612 | further separating unit | 2394 | Chlorosilanes |
| 624 | first fluid | 2398 | Si / solid Si |
| 626 | second fluid | 2400 | vent gas mixture |
| 850a | manufacturing device or CVD unit or CVD reactor respectively CVD SiC production reactor, in particular SiC PVT source material production reactor | 2401 | further fraction of vent gas mixture |
| | | 2400 | vent gas conduit |
| | | 2412 | first storage and/or conducting ele-ment |
| 850b | further manufacturing device or CVD unit or CVD reactor respectively CVD SiC production | | |
| | | 2414 | second storage and/or conducting element / pipe or hose |
| | | 2416 | bed reactor |
| | reactor, in particular SiC PVT source material production reactor | 2417 | gas inlet |
| | | 2418 | first part |
| 851 | first feeding device respectively first feed-medium source | | |
| | | 2419 | reactor chamber |
| 852 | second feeding device respectively second feed-medium source | 2420 | second part |
| | | 2421 | STC and TCS dividing device |
| 853 | third feeding device respectively third feed-medium source respectively carrier gas feed-medium source | 2422 | STC storage |
| | | 2424 | TCS storage |
| | | 2425 | metals removing device |
| 854 | mixing device | 2426 | waste storage |
| 2428 | paused/reduced vent gas mixture feeding | 2507 | actuator for continuously or step-wise forwarding seed particles |
| 2430 | TCS storage to bed reactor path | 2508 | seed particles / seed material particles |
| 2432 | SI supply unit | | |
| 2434 | HCl supply unit | 2509 | direction of seed particles inside the process chamber |
| 2436 | second fluid treatment unit / ab-sorber | 2510 | growing granule |
| 2438 | washer | 2512 | grown granule |
| 2440 | combustion unit / flare | 2514 | direction of grown granule |
| 2450 | vent gas storage | 2516 | insulation section |
| 2460 | exchange device | 2518 | turnstile device |
| 2462 | dotted arrow / input path | 2520 | maximum extension between two surface points |
| 2500 | reaction zone | 2522 | conduit or pipe |
| 2501 | upper end of reaction zone / fluid flow output section | 2524 | top wall section |
| 2502 | lower end of reaction zone / fluid flow entering section | 2540 | SiC and Chlorosilane production system |
| 2504 | heating unit | 2550 | Chlorosilane production unit |
| 2506 unit | seed material particles providing | | |

## Claims

1. CVD SiC production reactor (850), in particular SiC fluidized bed reactor (850a),
at least comprising
a process chamber (856), wherein the process chamber (856) at least surrounds a reaction zone (2500) for growing SiC,
a gas inlet unit (866) for feeding one feed-medium or multiple feed-mediums into the reaction zone of the process chamber (856) for generating or providing a source medium and for generating a fluid flow,
wherein the gas inlet unit (866) is coupled with at least one feed-medium source (851),
wherein a Si and C feed-medium source (851) provides at least Si and C, in particular SiCl3(CH3), and wherein a carrier gas feed-medium source (853) provides a carrier gas, in particular H2,
or
wherein the gas inlet unit (866) is coupled with at least two feed-medium sources (851, 852),
wherein a Si feed medium source (851) provides at least Si and wherein a C feed medium source (852) provides at least C, in particular natural gas, Methane, Ethane, Propane, Butane and/or Acetylene, and wherein a carrier gas medium source (853) provides a carrier gas, in particular H2,
a seed material particles providing unit (2506) for providing seed material particles into the reaction zone, wherein the seed material particles having at least a diameter between 20µm and 1000µm
wherein the reaction zone (2500) and the gas inlet unit (866) are configured to form the fluid flow in a manner to hold the seed material particles (2508), in particular a defined amount of seed material particles (2508), with the fluid flow for a defined minimum time of more than 5 seconds, in particular of more than 30 seconds, inside the reaction zone (2500) for forming SiC granules (2512) by accumulating SiC,
and
an inductive heating unit (2504) at least arranged in sections around the reaction zone (2500) for heating the source medium and the seed material particles (2508) inside the reaction zone (2500) to a temperature in the range between 1300°C and 2000°C.

2. CVD SiC production reactor according to claim 1,
**characterized in that**
the reaction zone (2500) is at least partially surrounded by one or multiple insulating sections (2516), wherein the one or multiple insulating sections (2516) is /are arranged in a tube-like manner forming a fluid flow entering section (2502) for fluid flow entering at least one fraction of the reaction zone (2500) and a fluid flow output section (2501) for fluid flow exiting the at least one fraction of the reaction zone (2500).

3. CVD SiC production reactor according to any of the before mentioned claims,
**characterized in that**
a gas pre-heating unit (855) for heating the one feed-medium or multiple feed-mediums to a temperature above 700°C, in particular above 1 100°C, is provided, wherein the gas pre-heating unit (855) is configured to pre-heat the one feed-medium or multiple feed-mediums prior to generating the fluid flow by feeding the one feed-medium or the multiple feed-mediums into the reaction zone by means of the gas inlet unit (866)
and/or
at least one turnstile device (2518) is provided in a section below the reaction zone (2500) for removing SiC granules (2512)
and/or
the seed material particles providing unit (2506) is configured to continuously feed seed material particles (2508) into the process chamber (856).

4. CVD SiC production reactor according to any of the before mentioned claims,
**characterized in that**
a vent gas outlet (216) for removing a vent gas mixture resulting from a reaction between the fluid flow of the one feed-medium or multiple feed-mediums and the seed material particles in the reaction zone from the process chamber (856) is provided.

5. SiC and Chlorosilane production system (2540),
comprising at least one
CVD SiC production reactor (850), in particular SiC fluidized bed reactor (850a), according to any of claims 1 to 4
and
a Chlorosilane production unit (2550), wherein the Chlorosilane production unit (2550) comprises at least a bed reactor (2416), in particular a fixed bed reactor or a fluidized bed reactor, for generating Chlorosilanes by reacting at least one fraction of the vent gas mixture provided via the vent gas outlet (216) of the CVD SiC production reactor (850) and Si, wherein further fractions of the vent gas mixture at least comprise H2 and a C-bearing molecule, in particular methane, and wherein Si is provided as solid (2398) inside the bed reactor (2416).

6. SiC and Chlorosilane production system according to claim 5,
**characterized in that**
the Chlorosilane production unit (2550) comprises a separating unit (602), in particular a distillation column, for separating one or multiple metals, in particular B, Al, Fe and/or P, from Chlorosilanes, in particular STC and/or TCS, generated by the bed reactor (2416).

7. SiC and Chlorosilane production system according to claim 5 or 6,
**characterized in that**
the Chlorosilane production unit (2540) comprises a fluid outlet, wherein the fluid outlet is coupled by means of a pipe or hose (2414) for conducting the generated Chlorosilanes with the gas inlet unit (866) of the CVD SiC production reactor (850) for feeding the generated Chlorosilanes into the process chamber (856a) of the CVD SiC production reactor (850) and/or with a gas inlet unit of a further CVD SiC production reactor (850b) for feeding the generated Chlorosilanes into the process chamber (856b) of the further CVD SiC production reactor (850b).

8. Method for the production of Silicon Carbide (SiC),
at least comprising the steps:
providing a CVD SiC production reactor (850), in particular according to any of claims 1 to 4, wherein the CVD SiC production reactor (850) comprises a process chamber (856), wherein the process chamber (856) at least surrounds a reaction zone (2500) for growing SiC,
feeding one feed-medium or multiple feed-mediums via a gas inlet unit (866) into the reaction zone (2500) of the process chamber (856) for generating or providing a source medium and for generating a fluid flow,
wherein the gas inlet unit (866) is coupled with at least one feed-medium source (851),
wherein a Si and C feed-medium source (851) provides at least Si and C, in particular SiCl3(CH3), and wherein a carrier gas feed-medium source (853) provides a carrier gas, in particular H2,
or
wherein the gas inlet unit (866) is coupled with at least two feed-medium sources (851, 852),
wherein a Si feed medium source (851) provides at least Si and wherein a C feed medium source (852) provides at least C, in particular natural gas, Methane, Ethane, Propane, Butane and/or Acetylene, and wherein a carrier gas medium source (853) provides a carrier gas, in particular H2,
providing seed material particles (2508) into the reaction zone (2500), in particular by means of a seed material particles providing unit (2506), wherein the seed material particles (2508) having at least a diameter between 20µm and 1000µm
forming the fluid flow in a manner to hold the seed material particles (2508), in particular a defined amount of seed material particles, with the fluid flow for a defined minimum time of more than 5 seconds, in particular of more than 30 second, inside the reaction zone (2500), for forming SiC granules (2512) by accumulating SiC
and
heating the source medium and the seed material particles (2508) inside the reaction zone (2500) to a temperature in the range between 1300°C and 2000°C.

9. Method according to 8,
**characterized in that** the
the seed material particles (2508) are made of C or comprises at least 90% [mass] C, in particular at least 98% [mass] C and preferably at least 99% [mass] C and highly preferably at least 99,9% [mass] C and most preferably at least 99,99% [mass] C.

10. Method according to 8,
**characterized in that** the
the seed material particles (2508) are made of SiC or comprises at least 90% [mass] SiC, in particular at least 98% [mass] SiC and preferably at least 99% [mass] SiC and highly preferably at least 99,9% [mass] SiC and most preferably at least 99,99% [mass] SiC.

11. Method according to claim 8, 9 or 10,
**characterized in that**
the seed material particles (2508) are continuously provided into the process chamber (856) by means of the seed material particles providing unit (2506)
and/or
the one feed-medium or multiple feed-mediums is/are pre-heated by means of a gas pre-heating unit (855) to a temperature above 700°C, in particular above 1100°C, prior to generating the fluid flow by feeding the one feed-medium or the multiple feed-mediums into the reaction zone (2500) via the gas inlet unit (866)
and/or
SiC granules (2512) are removed by means of at least one turnstile device (2518) from the process chamber (856).

12. Method according to any of claims 8 to 11,
**characterized by**
removing a vent gas mixture resulting from a reaction between the fluid flow of the one feed-medium or multiple feed-mediums and the seed material particles (2508) in the reaction zone (2500) from the process chamber (856) via a vent gas outlet (216).

13. Method according to claim 12,
**characterized in that**
at least a first fraction of the vent gas mixture is HCI,
wherein a second fraction of the vent gas mixture consists of vent gas Chlorosilanes, in particular STC and/or TCS,
wherein a third fraction (2401) of the vent gas mixture (2400) comprises or consists of H2 (2402)
and
wherein a fourth fraction of the vent gas mixture (2400) comprises or consists of at least one C-bearing-molecule, in particular methane, (2404),

14. Method according to claim 13,
**characterized by** the steps
Providing solid Si inside a reactor chamber (2419) of a Chlorosilane production unit (2550), wherein the solid Si (2398) comprises metal impurities of more than 1000ppmw,
Forwarding at least the second fraction of the vent gas mixture (2400) into the reactor chamber (2419) and preferably the second fraction of the vent gas mixture (2400) and the third fraction of the vent gas mixture (2400) and one more fraction of the vent gas mixture and particular preferably at least the second fraction of the vent gas mixture (2400) and the first fraction of the vent gas mixture and most preferably all fractions of the vent gas mixture (2400) into the reactor chamber (2419),
Generating Chlorosilanes inside the reactor chamber (2419) by reacting the second fraction of the vent gas mixture, in particular STC and/or TCS, and the solid Si (2398) and preferably by reacting at least the second fraction of the vent gas mixture and the first fraction of the vent gas mixture.

15. Method according to claim 14
**characterized by**
removing the generated Chlorosilanes from the Chlorosilane production unit (2550).

16. Method according to claim 15,
**characterized by**
Forwarding at least the generated Chlorosilanes (2394) removed from the Chlorosilane production unit into a process chamber (856a) of the CVD SiC production reactor (850a), and
Forwarding at least one C-bearing molecule into the CVD SiC production reactor (850a),
Producing SiC inside the process chamber (856a) of the CVD SiC production reactor (850a) by reacting the generated Chlorosilanes and C from the at least one C-bearing molecule on at least one deposition surface
or
Forwarding at least the generated Chlorosilanes (2394) removed from the Chlorosilane production unit into a process chamber (856b) of a further CVD SiC production reactor (850b), and
Forwarding at least one C-bearing molecule into the further CVD SiC production reactor (850b),
Producing SiC inside the process chamber (856) of the further CVD SiC production reactor (850b) by reacting the generated Chlorosilanes and C from the at least one C-bearing molecule on at least one deposition surface.

17. Method according to claim 14, 15 or 16,
**characterized in that**
the step of reducing the amount of metal impurities within the generated Chlorosilanes below 20ppmw and preferably below 10ppmw and highly preferably below 5ppmw and most preferably below 1ppmw is splitted into at least a first removal step and into a second removal step, wherein a first amount of metal impurities is removed in the first removal step and wherein a second amount of metal impurities is removed in a second removal step.

18. Method according to claim 17
**characterized by** the step of
separating the generated Chlorosilanes (2394) and the third fraction (2401) of the vent gas mixture (2400) and the fourth fraction of the vent gas mixture (2400) into a first fluid (624) and into a second fluid (626),
wherein the step of reducing the amount of metal impurities within the generated Chlorosilanes below 20ppmw and preferably below 10ppmw and highly preferably below 5ppmw and most preferably below 1ppmw and the step of separating the generated Chlorosilanes (2394) and the third fraction (2401) of the vent gas mixture (2400) and the fourth fraction of the vent gas mixture (2400) into a first fluid (624) and into a second fluid (626) are carried out by a separating unit,
wherein the first removal step and the step of separating the generated Chlorosilanes (2394) and the third fraction (2401) of the vent gas mixture (2400) and the fourth fraction of the vent gas mixture (2400) into a first fluid (624) and into a second fluid (626) are carried out by a separating unit
and
wherein the second removal step is carried out by another device, in particular a further separating unit, in particular a Chlorosilane distillation column.

19. SiC and Chlorosilane production system (2540),
comprising at least one
a Chlorosilane production unit (2550), wherein the Chlorosilane production unit (2550) comprises at least a bed reactor (2416), in particular a fixed bed reactor or a fluidized bed reactor, for generating Chlorosilanes by reacting at least one fraction of a vent gas mixture provided via a vent gas outlet (216) of a CVD SiC production reactor (850) and Si, wherein further fractions of the vent gas mixture at least comprise H2 and a C-bearing molecule, in particular methane, and wherein Si is provided as solid (2398) inside the bed reactor (2416)
and
a CVD SiC production reactor (850), in particular SiC fluidized bed reactor (850a), according to any of claims 1-4 for the production of SiC,
wherein the Chlorosilane production unit (2550) and the CVD SiC production reactor (850) are at least coupled via a conduit, in particular a pipe, for feeding the Chlorosilanes generated by means of the Chlorosilane production unit (2550) to the CVD SiC production reactor (850) for the production of SiC.
